# EUROPEAN PATENT SPECIFICATION

(11) **EP 2 245 803 B1**
(45) Date of publication and mention of the grant of the patent: **28.06.2017**
(21) Application number: 09708710.0
(22) Date of filing: 06.02.2009
(51) Int. Cl.: H04L 29/08, H04L 12/26

(54) **OPERATOR CLOUD FOR MOBILE INTERNET SERVICES**
BETREIBER-CLOUD FÜR MOBIL-INTERNET-DIENSTE
GRAPPE D'OPÉRATEURS POUR SERVICES INTERNET MOBILES

(30) Priority: 06.02.2008 US 26686
(43) Date of publication of application: 03.11.2010
(73) Proprietor: HERE Global B.V., 5611 ZT Eindhoven (NL)
(72) Inventor: LIBES, Michael, Seattle, Washington 98104 (US); RAGNO, Robert, Seattle, Washington 98104 (US)
(74) Representative: Potter Clarkson LLP
(86) International application number: PCT/US2009/033491
(87) International publication number: WO 2009/100402

(56) References cited:
- WO-A1-02/17139
- US-A1- 2003 105 763
- US-A1- 2003 172 143
- US-A1- 2003 229 892
- US-A1- 2006 070 117
- US-A1- 2007 072 605
- US-A1- 2007 155 396

## Description

### BACKGROUND

Over the Internet at-large, which transfers content from Web site publishers to users at computers primarily using TCP/IP communications and the hypertext transfer protocol (HTTP), keeping track of traffic has become a well-developed science. Internet cookies, IP addresses (URLs), and the like are employed to accumulate statistics on user visits to Web sites and to track users as they visit a Web site. Such statistics are used to determine Web sites with the most activity and to set advertising rates for online advertising.

Keeping track of traffic at Web sites from users who visit the sites via mobile browsers and collecting meaningful information can be very difficult. Artifacts from the Internet at-large under TCP/IP communications and the hypertext transfer protocol (http), such as Internet cookies, IP addresses, and the like, are not similarly available for mobile users. With mobile users who visit sites with mobile browsers, individual users generally gain access to content through a subscriber account and a device associated with the account, such as a Web-enabled mobile telephone, "smart phone", or other handheld device.

An individual mobile user gains access to the Web through an operator with whom the user has an account. As used herein, "operator" refers to telecommunications carriers, service providers, and the like who provide Internet access to users with mobile devices who are service subscribers. In general, each subscriber is associated with a single, assigned Internet access device, and it is extremely rare for a subscriber to share an access device with another person. Therefore, as used herein, the terms "user" and "subscriber" will be used interchangeably.

The user accounts are typically identified by a mobile telephone number that is assigned to the user's Web access device. The operators comprise individual nodes of the network and may be considered as nodes attached to the "Internet cloud" through which users retrieve content from Web publishers. In general, the publishers do not have direct access to the subscribers and do not have the ability to determine the identity of a user that connects to them. Thus, unlike the Internet at-large in which a user is assigned an IP address that identifies the network location from which a request for content originated, the mobile Web interposes an operator between the network "cloud" and the individual user. Due to resource constraints, limited browsers, and other factors, mobile users commonly have no analog to the Internet cookie, the primary means of tracking usage on the Internet at-large.

As noted above, in the Internet at-large, cookies, IP addresses, and the like are commonly used to track user visits to Web sites, making it possible to determine unique visitors to a site, page views within a site by particular users, referring sites, and the like. The metrics generated by such tracking are used by publishers, advertisers, and search engines to determine advertising payments based on user traffic at Web sites. As noted, mobile browsers typically do not utilize cookies and IP addresses. If cookies are utilized, they are generally of insufficient lifetime to be useful in Web traffic metrics. Thus, most mobile users appear as anonymous visitors to Web sites. As a result, Web publishers have no reliable mechanism for tracking mobile users who visit the publisher sites. This makes advertising rates difficult to calculate and justify, and makes it difficult to provide any personalization for site visitors, such as directed advertising. Thus, users are denied a Web experience that is more tailored to their particular interests and experience.

It is possible for operators to generate extremely precise user tracking information, because the operators function in the capacity of gateways to the Internet and thereby see all traffic to and from their subscriber users. Although an operator could provide Web publishers with such user tracking information, sharing the information would create significant privacy concerns on the part of the users, hi addition, operators would lose control over the user traffic data by such open sharing.

US 2003/172143 A1 discloses an access node apparatus capable of analyzing the Internet using condition of each user terminal according to the user profile information. In a process of a series of control procedures executed between a user terminal and an authentication server, the access node apparatus generates a management record that denotes the correspondence between the user ID and the IP address, then generates a data record that denotes a relationship between a packet receiving time and the destination/source IP address. The access node apparatus then stores the access record that includes the user ID generated from both of the data record and the management record in a table and uses the user profile table to execute a statistical processing according to the user profile. US 2006 070117 A1 discloses a method and system for monitoring users on one or more computer networks, disassociating personally identifiable information from the collected data, and storing it in a database so that the privacy of the users is protected. The system includes monitoring transactions at both a client and at a server, collecting network transaction data, and aggregating the data collected at the client and at the server. The system receives a user identifier and uses it to create an anonymized identifier. The anonymized identifier is then associated with one or more users' computer network transactions. The data is stored by a collection engine and then aggregated to a central database server across a computer network. WO 02/17139 A1 discloses a system and method for accurately identifying the geographic location from which users access a web site and the network origin of a user's request. The end user interacts with a web server over a network. The web server is provisioned with an Applicaion Program Interface API, an engine and a local instance of the database within the content provider execution environment. In operation, the user request for the web site reaches the web server which uses the API to send the user's IP address to the engine. If the engine does not have the user's geographic and network data stored locally in the database or cannot obtain it, the engine retrieves that data from the knowledge base stored on a content delivery network.

It should be apparent that improved tracking of mobile user traffic would offer potential benefit for Web publishers, advertisers, operators, and users. The present invention satisfies this need.

### SUMMARY

The present invention provides a method of providing traffic information for network communications and an operator cloud computer system in accordance with claims which follow. In accordance with the invention, an "operator cloud" is interposed between mobile users and the Internet. The operator cloud aggregates operators so as to comprise a single node between the mobile users and the Internet. The operator cloud can provide services through such operator aggregation, including the tracking of subscriber usage. Such tracking information can be shared with Web publishers, who otherwise would not have access to such data. In this way, the operator cloud can assist in monetizing tracking information relating to mobile users and thereby perform data collection on mobile traffic while ensuring user privacy. The tracking information maintained by the operator cloud can be maintained in an anonymous fashion, so that individual users cannot be identified. Thus, the operator cloud services can produce accurate metrics concerning mobile user traffic while safeguarding subscriber personal information. In this way, collection of traffic information and tracking of mobile users is improved without jeopardizing user privacy.

In one implementation, the operator cloud can be provided as a software application installed at an operator's router or gateway equipment and aggregation functions can be provided at a Web console application. The Web console application may include data warehouse functions. The Web console may be provided through the operator cloud.

Other objects and advantages of the present invention will be apparent to one of ordinary skill in the art upon review of the detailed description of the present invention and the included figures.

### BRIEF DESCRIPTION OF THE DRAWINGS

Figure 1 is a representation of network communications according to a conventional arrangement of the mobile Web.
Figure 2 is a representation of network communications in accordance with the invention.
Figure 3 is a representation of data flow in accordance with the Figure 2 configuration for user tracking information.
Figure 4 is a representation of data flow in accordance with the Figure 2 configuration for user location information.
Figure 5 is a representation of data flow in accordance with the Figure 2 configuration for user profile information.
Figure 6 is a representation of operational components deployed in the Figure 2 configuration.
Figure 7 is a flow chart that illustrates operations to collect user traffic information.
Figure 8 is a block diagram of a computer device constructed in accordance with the present invention.

### DETAILED DESCRIPTION

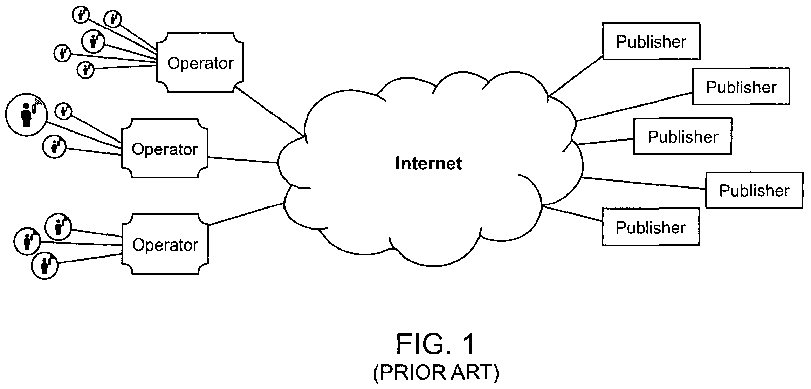

Figure 1 shows a conventional arrangement of mobile users at the left-hand side of the drawing having Web-enabled mobile devices, such as smart phones and the like, communicating through their service providers and/or carriers, illustrated in the drawing as operators, to gain access to the Internet. The users request Web content in the mobile space (i.e., using mobile browsers) from content publishers at the right-hand side of the drawing. The requests may be modified, augmented, aggregated, and/or cached by the operators. In particular, the operators may add or remove information that identifies a user, either individually or as an aggregate. The users receive the requested content through their respective operators. The content and associated metadata may be modified and/or augmented by the operators before delivery to the users.

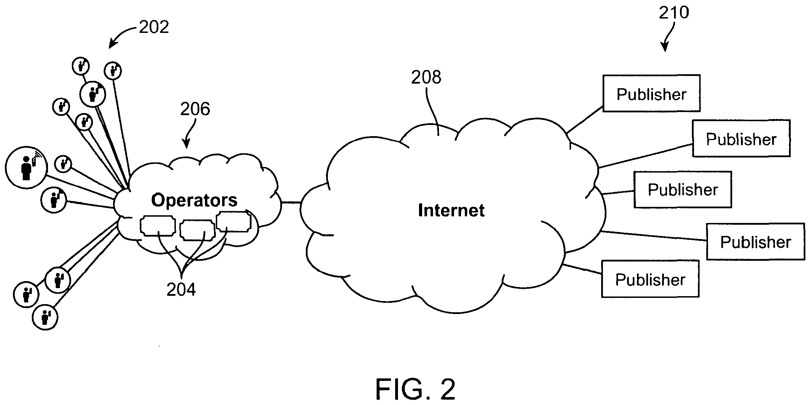

Figure 2 is a representation of network communications in accordance with the invention that shows mobile users with Web-enabled mobile devices 202, such as smart phones and the like, communicating through their service provider operators 204, who are illustrated as located within an Operator Cloud 206. In this way, the mobile users 202 gain access to the Internet 208. In particular, the users request Web content from content publishers 210 using mobile browsers of their mobile devices 202. The users receive the requested content through their respective operators.

Because the requested content is requested and delivered through mobile browsers of hand-held devices rather than through conventional browsers over the Web at-large, features such as cookies and IP addresses are not an integral part of the user information available to the publishers. For this reason, the Web publishers can often only utilize relatively poor user tracking information about the mobile users. In contrast, extremely precise tracking information is available to the operators, acting as they do in the capacity as a gateway/intermediary to the Internet. Although a carrier could share such user information with publishers, this would create significant privacy concerns on the part of the users. The is particularly acute for mobile usage because of the high precision and persistence of the identification of a user via mobile device. Such sharing would also lose control over the associated data for the carrier, and it would not enable the operation of a marketplace for the derived information.

Figure 2 shows that the Operator Cloud 206 aggregates multiple operators 204 into a single "operator cloud" that communicates with content publishers over the Internet. That is, the operator cloud is interposed between the mobile users and the Internet. In particular, the gateways of the operators are configured to communicate with devices of the operator cloud, which are configured to receive communications from the operators comprising user requests for content. The operator cloud then retrieves the requested content from the Web publishers and provides the retrieved content to the operators, who pass the retrieved content on to the requesting mobile users. In this way, the operator cloud aggregates user requests that are received from the operators and accumulates statistics relating to the aggregated requests. The fidelity of the user request information will depend on the degree of cooperation in data sharing between the separate operators and the operator cloud. Thus, the operator cloud can provide Web tracking information about mobile users in accordance with user membership in one or more groups or aggregates. Such memberships may include possibly overlapping groupings of users, such as membership in multiple aggregated groups. Depending on the characteristics of the aggregates, this can accurately track usage and other statistics.

The operator cloud provides operators with a convenient means for charging Web publishers for traffic information through the ability of the operator cloud to provide user tracking statistics, either before mobile traffic occurs to a Web site or after the mobile traffic (i.e., site visit) is completed and the mobile user leaves the Web site. With the operator cloud, it is possible to have a traffic information marketplace, with or without bidding, if multiple operators can generate desired statistical data that can be relied upon by publishers for accuracy.

Using the operator cloud, it is also possible for the operators to enable a latent market for aggregated usage data. In this scenario, every traffic event, referred to herein as a "request", at a Web site is associated with a unique identifier. Such a request identifier would be more unique than a per-user identifier; it would only apply to that particular request. As a result, a request identifier would not allow even basic aggregated statistics, such as unique user counts, because the request identifier is not associated with a particular user. Nevertheless, if a publisher provided Web site traffic data that referenced one or more event identifiers, an operator could then map the identifiers to user aggregates (or even unique users) and generate requested traffic statistics. The mapping could be performed and provided to the publisher through the Operator Cloud. This would allow operators to charge for statistical analysis, including different levels of detail, and to halt such functionality as desired. The operators would not need to keep the large quantity of data around relating to all user traffic. The operators would also not need to understand the grouping and filtering and weighting that a publisher might want to perform to feed into an analysis.

The Operator Cloud provides the common marketplace and process for the information transactions. The modification to the user request handling may be implemented as either a literal intermediary--a second-level operator between the operators and users--or as a common system deployed at the participating operators. The Operator Cloud determines the form and meaning of the identifying information provided to the publishers on each user request. This can include explicit aggregate identity, and it may include encoded, opaque information that can later be provided to the Operator Cloud for processing. The information included can depend on previously-arranged agreements between the publishers and operators.

The Operator Cloud can also provide the system that supports publishers querying for statistical analysis of a set of traffic history containing encoded information. The traffic can be delegated to the appropriate operators as needed for processing. The Operator Cloud also provides the opportunity for a marketplace for such analytical functionality, including optionally a bidded marketplace. This is particularly important if multiple operators could adequately supply the analytics requested by a publisher.

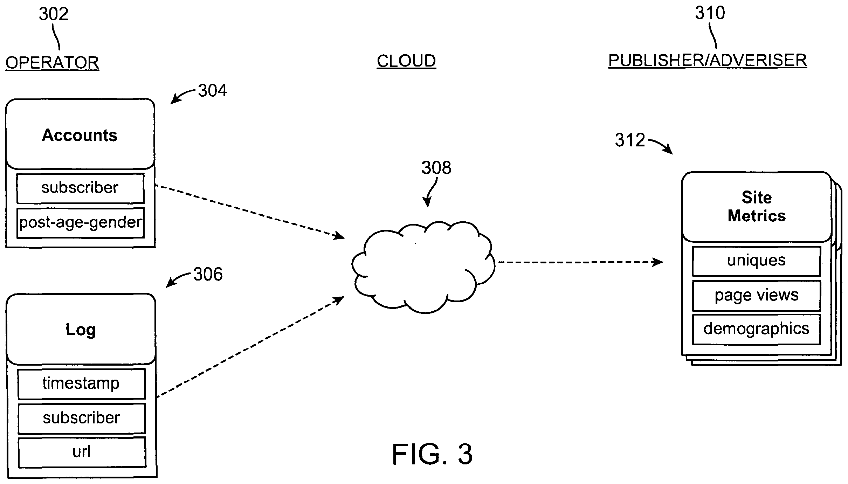

Figure 3 is a representation of data flow for user tracking information in accordance with the Figure 2 configuration. At the left-hand side of the drawing, an Operator 302 who has user accounts 304 provides Internet access to mobile users by forwarding user requests for content to the Operator Cloud 308 and maintaining logs 306 of such activities. The user accounts 304 are associated with user information, such as an account identifying number (phone number) and demographic information such as age, gender, and cataloged personal interests. The user request is received at the Operator Cloud 308 , which has access to the user information from the Operator 302. Depending on the business relationship between the Operator, Operator Cloud, and Publishers 310, the Operator Cloud may forward such information to the publishers, or may perform analytics prior to doing so, or may aggregate such data to "anonymize" it before sharing with the Publishers. At a publisher Web site, the request for content is logged as a site visit or request, and statistics about the visit are collected as site metrics 312. The site metrics may include, for example, number of unique mobile user visitors, number of views of page content by each mobile user, and associated demographics of the visiting mobile users. It may also include more complex metrics, such as the number of users in common between the sets visiting two pages, or the amount of traffic flowing between two sites. It can also include metrics based on publisher modeling, such as the number of users making purchases or the number of users interacting with a conceptual category of content.

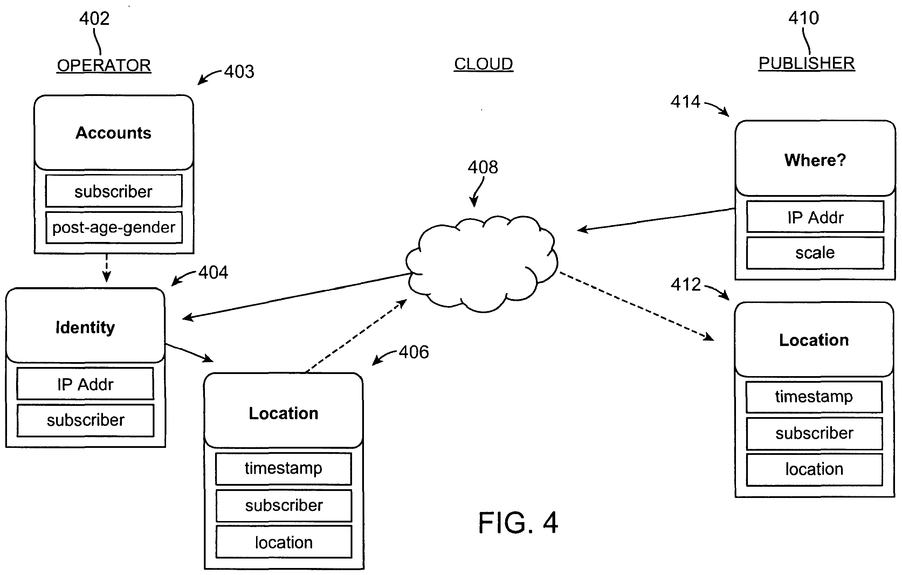

Figure 4 is a representation of data flow for user location information in accordance with the Figure 2 configuration. The Operators 402 with whom mobile users have accounts 403 provide such access via subscriber accounts. Thus, the Operators inherently have identity information 404 such as IP address and/or subscriber identification. When a subscriber requests content via an operator, the request inherently includes location information 406 known to the operator such as timestamp (time of day for the user request), the aforementioned subscriber information, and location information such as geographic location, which may be known via GPS or telecommunication information (such as the Skyhook information service and other position locating means). When the user request is sent to the Internet via the Operator Cloud 408, such information is received by the Operator Cloud. The Publishers 412 can receive selective portions 412 of the location information, depending on business relationships with the Operator Cloud, Operators, and Publishers. The Publisher is then free to utilize the user location information 412, such as with adjustments to content 414 depending on user location and scale of information aggregation (e.g., granularity of responses or customization programs).

The operators have user identity for each request, for which they may also have associated demographic and personal information. Some derivative of this information is passed through to the publisher upon the request, where the traffic is logged for later analysis. This derivative can be determined by the Operator Cloud based on existing agreements. The derivative may contain encoded identity information and/or aggregate user identity; it does not uniquely identify the user in a way accessible to the publisher.

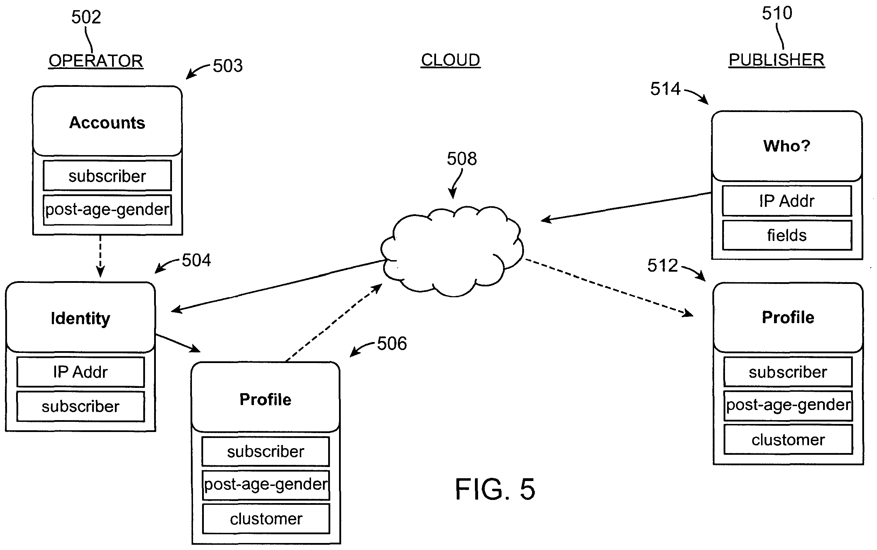

Figure 5 is a representation of data flow for user profile information in accordance with the Figure 2 configuration. As noted previously, the Operators 502 with whom mobile users have accounts 503 provide such access via subscriber accounts, which inherently provide the Operators with identity information 504 such as IP address and/or subscriber identification. In addition, Operators may also maintain user profile information 506 that reflects user demographics, and subscriber and customer information or "clustomer" (a particular user aggregate). When a subscriber requests content via an Operator, the Operator may provide profile information with the request for content that is sent to the Operator Cloud 508. As with the location information, the Publishers can be provided with selected profile information 512 can be selectively passed along to the Publishers 510, depending on business relationships with the Operator Cloud, Operators, and Publishers. The Publisher is then free to utilize the user profile information, such as with adjustments to content 514 depending on user location and scale of information aggregation (e.g., granularity of responses or customization programs).

The publisher providers the Operator Cloud with recorded traffic information of one or more requests, including any encoded information provided through the Operator Cloud upon the request or requests. The publisher also specifies a particular statistical function that is desired (which may be a trivial mapping, if there is only a single request involved). The Operator Cloud then delegates the traffic to the appropriate operators and collects the response or responses. This delegation may depend on existing agreements and/or on a bidding environment for the function needed. The result is then conveyed to the publisher.

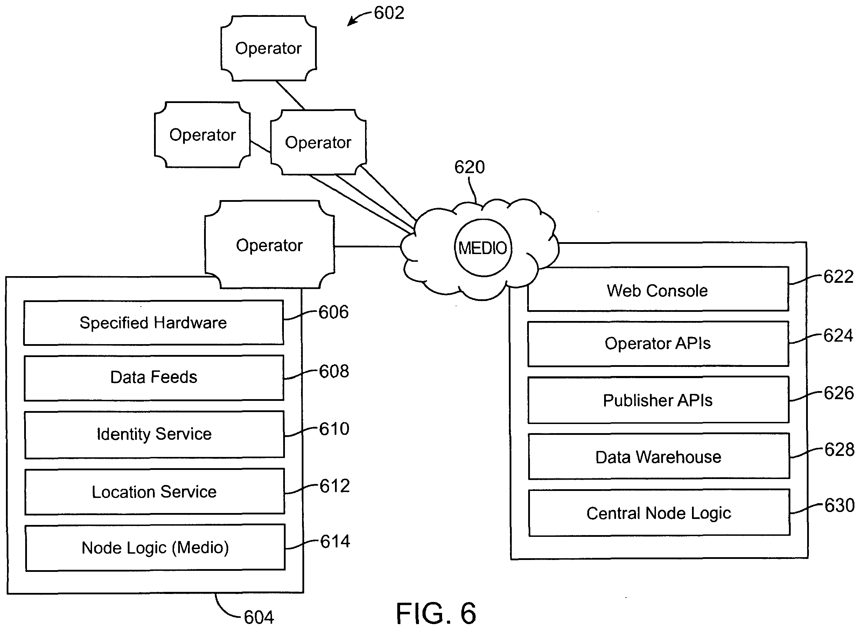

Figure 6 is a representation of operational components deployed in the Figure 2 configuration. Figure 6 shows that each operator 602 comprises a collection of one or more computer devices 604 that perform operations to provide access to Web content and generate mobile user traffic information. The computer devices include specified hardware 606 such as server computers, routers, and the like. The specified hardware makes use of data feeds 608, such as messaging, RSS feeds, user node information, and the like. The identity service 610 comprises data communications relating to the mobile user who is communicating with the operator and requesting access to content, so as to authenticate the user and authorize the access. The location service 612 comprises data communications relating to the geographic location of the mobile user. Lastly, each operator includes node logic 614 to interface with the Operator Cloud, which is identified in Figure 6 as "Medio", representing Medio Systems, Inc., the assignee of the present invention and the provider of the Operator Cloud services.

Figure 6 shows the operators communicating with the Operator Cloud ("Medio") 620 and illustrates the components of the Operator Cloud as including a Web console 622, Operator APIs (Application Program Interfaces) 624, Publisher APIs 626, data warehouse 628, and central node logic 630. The Operator Cloud is implemented with one or more computer devices that perform operations to provide the Operator Cloud functions described herein. More particularly, the central node logic 630 provides the functionality as described herein for the Operator Cloud such that the computer devices perform the Operator Cloud functions. The data warehouse is the repository for the mobile user traffic information and may comprise one or more of the computer devices that operate according to the central node logic, or may comprise independent data storage devices separate from the central node logic computers, so long as the central node logic has access to the information maintained at the data warehouse as needed. The Operator APIs provide the interface between the Operator Cloud and the Operators to permit the interchange of data between the parties. Similarly, the Publisher APIs, provide the interface between the Operator Cloud and the Publishers to permit the interchange of data between the parties.

In one aspect, through the Operator Cloud, operators can charge the publishers for the ability to obtain tracking statistics, either before traffic occurs or after the traffic is completed. That is, the Operator Cloud provides a convenient marketplace, with or without bidding, if multiple operators can potentially serve the purpose of generating desired statistical data. Thus, it could be possible for the operators to enable a latent market for aggregated usage data. In one configuration, every traffic event (such as a request for Web content) would be assigned a unique event identification number, which would be provided to the publisher with the request for content. The event identifier would be more unique than a per-user identifier, because it would only apply to that traffic event. As a result, it would not allow even basic aggregated statistics, such as unique user counts. However, if a publisher provided a traffic sample referencing such identifiers, an operator could then map the event identifiers to user aggregates (or even unique users) and generate requested statistics. This allows operators to charge for statistical analysis, including different levels of detail, and to halt such functionality as desired. The operators would not need to keep the large quantity of data around relating to all user traffic. The operators would also not need to understand the grouping and filtering and weighting that a publisher might want to perform to feed into an analysis.

The mechanism for such a feature can be fairly straightforward. As an illustrative but not comprehensive example, it could be based on cryptography principles. In such a configuration, for each user request, an operator makes note of a user identifier, appends an aggregate identifier if desired, and also appends some random bytes (often referred to as "salt"). Then, the total quantity of information is encrypted. This will result in a unique identifier for every user request. However, if the operator is ever presented with such identifiers in the fixture, they would be able to decrypt the contents and recover the user or user aggregate identities. This encryption technique thus enables the operator to report on any statistics desired by a publisher and allowed by the operator. For example, given two Web pages, and a set of unique request identifiers recorded for each based on traffic, the operator can determine the number of users that visited both pages. The publisher, however, would be unable to compute this statistic, despite holding all of the usage data. The Operator Cloud is a convenient means for facilitating such business relationships and for supporting a marketplace in such information, while helping to ensure user privacy.

It is easily possible in such a traffic event identifying scheme for an operator to prevent any excessive manipulation of the system by a publisher. Adding any verification data, such as a redundancy check, before the encryption will make it impossible (within the guarantees of the encryption) for publishers to fabricate identifiers. Adding timestamps would securely identify the time period in which the traffic truly occurred. Adding sequence numbers would allow for easily preventing the publisher from omitting traffic from a period being provided.

Regardless of any latent decoding, an operator can behave such that particular statistics can be faithfully observed over time, while still providing significant user identity obfuscation. One aspect is switching aggregates. If a user aggregate is directly provided with every request, it could undesirably track an individual user too heavily, such as during a low traffic period. To address this, an operator could allow for randomly switching the aggregate to which a user appears to belong. Over a significant time period, this can be performed such that the publisher is still able to calculate unique visitor counts and other statistics with high accuracy, despite obtaining a probabilistic result.

The operators may allow for the publishers to define characteristics of the user aggregates that the operator will make available. These characteristics may be dependent on the level of compensation provided by a publisher. They may result in user aggregates that represent demographic or geographical groupings, for example. Again, the Operator Cloud is a convenient mechanism for facilitating such exchanges and commerce.

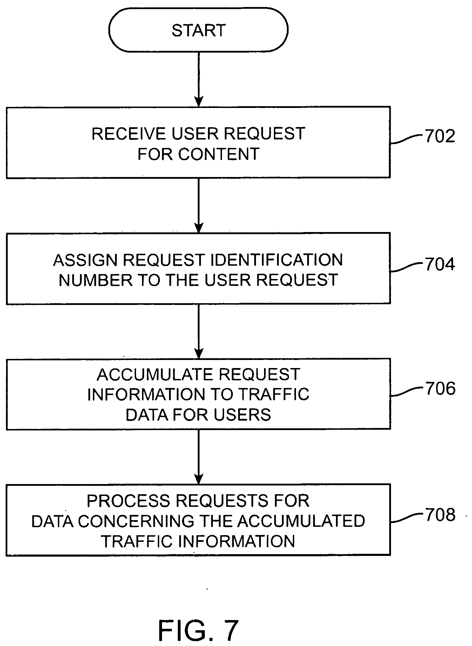

Figure 7 is a flow chart that illustrates operations to collect traffic information. In the first operation at box 702, a user request for content is received. The user request inherently includes user identification information, and optionally other identifying information such as location information, profile information, and tracking information may be added to the user request. The user request operations 702 may be carried out at the operators, or at the Operator Cloud, or the operations may be split between the two. At the box 704, an event identification number or request number is assigned to the user request for content. The request identification number is an optional feature, as noted above, that is not required for Operator Cloud operation. Next, at box 706, the request for Web content is added to traffic data for users into a database. The database provides Web site statistics and metrics. As noted above, the database of traffic information may be maintained at the Operator Cloud, or may be maintained at operators or publishers. When the database is maintained in conjunction with encryption techniques, user privacy is ensured. Lastly, at box 708, requests for data concerning the traffic information are processed. This operation is performed by the Operator Cloud, providing a marketplace for such information, as described above. A publisher, for example, may request traffic information for every content request from a mobile user, so as to acquire user demographic information and tailor the returned content (perhaps with an advertisement) for the requesting user. The Operator Cloud would provide such user information for an agreed upon fee, thereby defraying the Operator Cloud expenses in maintaining the access to the Operator data and maintaining the database of traffic information.

Thus, the requested content is returned to the user device in accordance with supplemental content determined in accordance with the generated metrics. That supplemental content may comprise advertising selected by the publisher. The publisher may select the supplemental content in accordance with the generated metrics relating to the accumulated traffic information. The generated metrics may include traffic information at the user level or at the aggregated, user group level. In any case, the Operator Cloud is contemplated to generate the metrics to the Publishers such that the metrics lack identification of the user associated with the subscriber account associated with the request.

### Exemplary Hardware System

The systems and methods described above may be implemented in a number of ways. One such implementation includes computer devices having various electronic components. For example, components of the system in Figure 2 may, individually or collectively, be implemented with devices having one or more Application Specific Integrated Circuits (ASICs) adapted to perform some or all of the applicable functions in hardware. Alternatively, the functions may be performed by one or more other processing units (or cores), on one or more integrated circuits. In other embodiments, other types of integrated circuits may be used (e.g., Structured/Platform ASICs, Field Programmable Gate Arrays (FPGAs), and other Semi-Custom ICs), which may be programmed in any manner known in the art. The functions of each unit may also be implemented, in whole or in part, with instructions embodied in a memory, formatted to be executed by one or more general or application-specific computer processors.

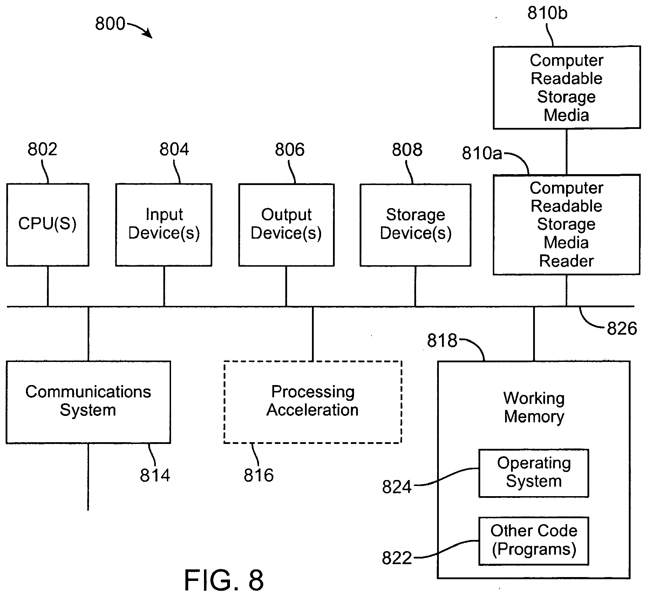

Figure 8 provides a block diagram of a computer system 800 for implementing certain functions and operations as described herein. In one embodiment, the system 800 may function as the system shown in Figure 2. It should be noted that Figure 8 is meant only to provide a generalized illustration of various components, any or all of which may be utilized as appropriate. Figure 8, therefore, broadly illustrates how individual system elements may be implemented in a relatively separated or relatively more integrated manner.

The computer system 800 is shown comprising hardware elements that can be electrically coupled via a bus 826 (or may otherwise be in communication, as appropriate). The hardware elements can include one or more processors 802, including without limitation one or more general-purpose processors and/or one or more special-purpose processors (such as digital signal processing chips, graphics acceleration chips, and/or the like); one or more input devices 804, which can include, without limitation, a mouse, a keyboard, and/or the like; and one or more output devices 806, which can include without limitation a display device, a printer, and/or the like.

The computer system 800 may further include (and/or be in communication with) one or more storage devices 808, which can comprise, without limitation, local and/or network accessible storage and/or can include, without limitation, a disk drive, a drive array, an optical storage device, solid-state storage device such as a random access memory ("RAM"), and/or a read-only memory ("ROM"), which can be programmable, flash-updateable, and/or the like. The system 800 might also include a communications subsystem 814, which can include without limitation a modem, a network card (wireless or wired), an infra-red communication device, a wireless communication device and/or chipset (such as a Bluetooth device, an 802.11 device, a WiFi device, a WiMax device, cellular communication facilities, etc.), and/or the like. The communications subsystem 814 may permit data to be exchanged with a network (such as the network described below, to name one example), and/or any other devices described herein. In many embodiments, the computational system 800 will further comprise a working memory 818, which can include a RAM or ROM device, as described above.

The computer system 800 also may comprise software elements, shown as being currently located within the working memory 818, including an operating system 824 and/or other code, such as one or more application programs 822, which may comprise computer programs of the invention, and/or may be designed to implement methods of the invention and/or configure systems of the invention, as described herein. Merely by way of example, one or more procedures described with respect to the method(s) discussed above might be implemented as code and/or instructions executable by a computer (and/or a processor within a computer). A set of these instructions and/or code might be stored on a computer readable storage medium 810b. In some embodiments, the computer readable storage medium 810b is the storage device(s) 808 described above. In other embodiments, the computer readable storage medium 810b might be incorporated within a computer system. In still other embodiments, the computer readable storage medium 810b might be separate from the computer system (i.e., a removable medium, such as a compact disc, etc.), and or provided in an installation package, such that the storage medium can be used to program a general purpose computer with the instructions/code stored thereon. These instructions might take the form of executable code, which is executable by the computer system 800 and/or might take the form of source and/or installable code, which, upon compilation and/or installation on the computer system 800 (e.g., using any of a variety of generally available compilers, installation programs, compression/decompression utilities, etc.), then takes the form of executable code. In these embodiments, the computer readable storage medium 810b may be read by a computer readable storage media reader 810a.

It will be apparent to those skilled in the art that substantial variations may be made in accordance with specific requirements. For example, customized hardware might also be used, and/or particular elements might be implemented in hardware, software (including portable software, such as applets, etc.), or both. Further, connection to other computing devices such as network input/output devices may be employed.

In one embodiment, a computer system (such as the computational system 800) is used to perform methods in accordance with the invention. According to a set of embodiments, some or all of the procedures of such methods are performed by the computational system 800 in response to processor 802 executing one or more sequences of one or more instructions (which might be incorporated into the operating system 824 and/or other code, such as an application program 822) contained in the working memory 818. Such instructions may be read into the working memory 818 from another machine-readable medium, such as one or more of the storage device(s) 808 (or 810). Merely by way of example, execution of the sequences of instructions contained in the working memory 818 might cause the processor(s) 802 to perform one or more procedures of the methods described herein.

The terms "machine readable medium" and "computer readable medium," as used herein, refer to any medium that participates in providing data that causes a machine to operate in a specific fashion. In an embodiment implemented using the computational system 800, various machine-readable media might be involved in providing instructions/code to processor(s) 802 for execution and/or might be used to store and/or carry such instructions/code (e.g., as signals). In many implementations, a computer readable medium is a physical and/or tangible storage medium. Such a medium may take many forms, including but not limited to, non-volatile media, volatile media, and transmission media. Non-volatile media includes, for example, optical or magnetic disks, such as the storage device(s) (808 or 810). Volatile media includes, without limitation, dynamic memory, such as the working memory 818. Transmission media includes coaxial cables, copper wire, and fiber optics, including the wires that comprise the bus 826, as well as the various components of the communication subsystem 814 (and/or the media by which the communications subsystem 814 provides communication with other devices). Hence, transmission media can also take the form of waves (including, without limitation, radio, acoustic, and/or light waves, such as those generated during radio-wave and infra-red data communications).

Common forms of physical and/or tangible computer readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, an EPROM, a FLASH-EPROM, any other memory chip or cartridge, a carrier wave as described hereinafter, or any other medium from which a computer can read instructions and/or code.

Various forms of machine-readable media may be involved in carrying one or more sequences of one or more instructions to the processor(s) 802 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computational system 800. These signals, which might be in the form of electromagnetic signals, acoustic signals, optical signals, and/or the like, are all examples of carrier waves on which instructions can be encoded, in accordance with various embodiments of the invention.

The communications subsystem 814 (and/or components thereof) generally will receive the signals, and the bus 826 then might carry the signals (and/or the data, instructions, etc. carried by the signals) to the working memory 818, from which the processor(s) 802 retrieves and executes the instructions. The instructions received by the working memory 818 may optionally be stored on a storage device 808 either before or after execution by the processor(s) 802.

It will be appreciated that many processing capabilities in addition to those described are possible, without departing from the teachings according to the invention. Further, it should be noted that the methods, systems, and devices discussed above are intended merely to be examples. Various embodiments may omit, substitute, or add various procedures or components as appropriate. For instance, it should be appreciated that, in alternative embodiments, the methods may be performed in an order different from that described, and that various steps may be added, omitted, or combined. Also, features described with respect to certain embodiments may be combined in various other embodiments. Different aspects and elements of the embodiments may be combined in a similar manner. Also, it should be emphasized that technology evolves and, thus, many of the elements are examples and should not be interpreted to limit the scope of the invention.

Specific details are given in the description to provide a thorough understanding of the embodiments. However, it will be understood by one of ordinary skill in the art that the embodiments may be practiced without these specific details. For example, well-known circuits, processes, algorithms, structures, and techniques have been shown without unnecessary detail in order to avoid obscuring the embodiments. Further, the headings provided herein are intended merely to aid in the clarity of the descriptions of various embodiments, and should not be construed as limiting the scope of the invention or the functionality of any part of the invention. For example, certain methods or components may be implemented as part of other methods or components, even though they are described under different headings.

Also, it is noted that the embodiments may be described as a process which is depicted as a flow diagram or block diagram. Although each may describe the operations as a sequential process, many of the operations can be performed in parallel or concurrently. In addition, the order of the operations may be rearranged. A process may have additional steps not included in the figure.

## Claims

1. A method of providing traffic information for network communications, the method comprising:
receiving (702) a network communication at an operator cloud computer (206) through an operator (204, 302, 304, 502) of a set of multiple operators (204), the network communication sent by the operator, to the receiving operator cloud computer, in response to a user request from a user device (202) associated with a mobile user having a subscriber account (304,403,503) with the operator, wherein the user request is a request from a mobile application by the user device that was received at the operator for content from a publisher (210,310,410,510), the user request having an associated unique request identifier and a request for content, the unique request identifier generated by the operator by performing encryption based on a user identifier of the user request and being associated only with the particular user request;
producing (706) accumulated traffic information at the operator cloud computer, the accumulated traffic information relating to the network communication received from the operator and relating to a plurality of previously received network communications, each of the plurality of previously received network communications having been sent to the operator cloud computer by one of the multiple operators in response to respective user requests for content, the respective user requests each having an associated unique request identifier and an associated request for content, each unique request identifier generated by the operator by performing encryption based on a user identifier of each respective user request and being associated only with the particular respective user request;
generating (708), at the operator cloud computer, metrics (312, 628) relating to the accumulated traffic information using the unique request identifier of each respective user request for content;
retrieving the requested content from the publisher at the operator cloud computer based on the request for content and providing the retrieved requested content from the operator cloud computer to the operator, in response to the received network communication; and
providing the generated metrics from the operator cloud computer to the publisher, the provided metrics lacking identification of the user associated with the subscriber account due to the encryption by the operator used to generate the associated unique request identifier.

2. The method as in claim 1, wherein receiving the network communication further includes assigning (704) the unique request identifier to the received network communication.

3. The method as in claim 1, wherein producing (706) accumulated traffic information comprises encrypting the traffic information.

4. The method as in claim 1, further including returning the requested content to the user device in accordance with supplemental content determined in accordance with the generated metrics.

5. The method as in claim 1, wherein the publisher presents the associated unique request identifier to the operator, and wherein the operator decrypts the associated unique request identifier to recover the associated user identifier.

6. An operator cloud computer system (206, 800) that provides traffic information for network communications, the system comprising:
a communications subsystem (814) configured for communication by the operator cloud computer system with a network (208);
a processor (802) of the operator cloud computer system (206, 800), configured to:
receive (702) a network communication through an operator (204,302,402,502) of a set of multiple operators (204), the network communication sent by the operator, to the receiving processor of the operator cloud computer system (206, 800), in response to a user request from a user device (202) associated with a mobile user having a subscriber account (304,403,503) with the operator, wherein the user request is a request from a mobile application by the user device that was received at the operator for content from a publisher (210,310,410,510), the user request having an associated unique request identifier and a request for content, each unique request identifier generated by the operator by performing encryption based on a user identifier of the user request and being associated only with the particular user request,
the processor (802) further configured to:
produce (706) accumulated traffic information, the accumulated traffic information relating to the network communication received from the operator and relating to a plurality of previously received network communications, each of the plurality of previously received network communications having been sent to the processor of the operator cloud computer system by one of the multiple operators in response to respective user requests for content, the respective user requests each having an associated unique request identifier and an associated request for content, the unique request identifier generated by the operator by performing encryption based on a user identifier of each respective user request and being associated only with the particular respective user request,
the processor (802) further configured to (708):
generate metrics (312, 628) relating to the accumulated traffic information using the unique request identifier of each respective user request for content;
retrieve the requested content from the publisher based on the request for content and provide the retrieved requested content to the operator in response to the received network communication; and
provide the generated metrics to the publisher, the provided metrics lacking identification of the user associated with the subscriber account due to the encryption by the operator used to generate the associated unique request identifier.

7. The computer system as in claim 6, wherein the processor is further configured to assign (704) the unique request identifier to the received network communication.

8. The computer system as in claim 6, wherein the processor is further configured to encrypt the accumulated traffic information.

9. The computer system as in claim 6, further comprising returning the requested content to the user device in accordance with supplemental content determined in accordance with the generated metrics.

10. The computer system as in claim 6, wherein the publisher is configured to present the associated unique request identifier to the operator, and wherein the operator is configured to decrypt the associated unique request identifier to recover the associated user identifier.

11. A computer program (822) which when executing within a computer or computer network, performs the steps of any of claims 1 to 5.

12. The computer program of claim 11, when stored on a computer readable storage medium (810b).

## Patentansprüche

1. Verfahren zum Bereitstellen von Verkehrsinformationen für Netzwerkkommunikationen, wobei das Verfahren Folgendes umfasst:
Empfangen (702) einer Netzwerkkommunikation an einem Bediener-Cloud-Computer (206) durch einen Bediener (204, 302, 304, 502) aus einer Gruppe von mehreren Bedienern (204), wobei die Netzwerkkommunikation als Reaktion auf eine Benutzeranforderung von einer mit einem Mobilbenutzer mit einem Abonnentenkonto (304, 403, 503) bei dem Bediener verknüpften Benutzervorrichtung (202) von dem Bediener an den empfangenden Bediener-Cloud-Computer gesendet wird, wobei die Benutzeranforderung eine bei dem Bediener empfangene Anforderung von einer Mobilanwendung durch die Benutzervorrichtung nach Inhalten von einem Herausgeber (210, 310, 410, 510) ist, wobei die Benutzeranforderung einen verknüpften eindeutigen Anforderungsidentifikator und eine Anforderung nach Inhalten aufweist, wobei der eindeutige Anforderungsidentifikator von dem Bediener durch Ausführen von Verschlüsselung auf der Grundlage eines Benutzeridentifikators der Benutzeranforderung generiert wird und nur mit der bestimmten Benutzeranforderung verknüpft ist;
Erzeugen (706) von angesammelten Verkehrsinformationen im Bediener-Cloud-Computer, wobei die angesammelten Verkehrsinformationen sich auf die von dem Bediener empfangene Netzwerkkommunikation beziehen und sich auf mehrere zuvor empfangene Netzwerkkommunikationen beziehen, wobei jede der mehreren zuvor empfangenen Netzwerkkommunikationen von einem der mehreren Bediener als Reaktion auf jeweilige Benutzeranforderungen nach Inhalten an den Bediener-Cloud-Computer gesendet worden ist, wobei die jeweiligen Benutzeranforderungen jeweils einen verknüpften eindeutigen Anforderungsidentifikator und eine damit verknüpfte Anforderung nach Inhalten aufweisen, wobei jeder durch Ausführen von Verschlüsselung eindeutige Anforderungsidentifikator auf der Grundlage eines Benutzeridentifikators jeder jeweiligen Benutzeranforderung von dem Bediener generiert wird und nur mit der bestimmten jeweiligen Benutzeranforderung verknüpft ist;
Generieren (708), am Bediener-Cloud-Computer, von Metriken (312, 628) mit Bezug auf die gesammelten Verkehrsinformationen unter Einsatz des eindeutigen Anforderungsidentifikators jeder jeweiligen Benutzeranforderung nach Inhalten;
Abrufen der angeforderten Inhalte von dem Herausgeber an dem Bediener-Cloud-Computer auf der Grundlage der Anforderung nach Inhalten und Bereitstellen der abgerufenen angeforderten Inhalte von dem Bediener-Cloud-Computer an den Bediener als Reaktion auf die empfangene Netzwerkkommunikation; und
Bereitstellen der generierten Metriken von dem Bediener-Cloud-Computer an den Herausgeber, wobei den bereitgestellten Metriken aufgrund der zum Generieren des verknüpften eindeutigen Anforderungsidentifikators eingesetzten Verschlüsselung durch den Bediener eine Identifikation des mit dem Abonnentenkonto verknüpften Benutzers fehlt.

2. Verfahren nach Anspruch 1, wobei das Empfangen der Netzwerkkommunikation ferner das Zuordnen (704) des eindeutigen Anforderungsidentifikators zu der empfangenen Netzwerkkommunikation enthält.

3. Verfahren nach Anspruch 1, wobei das Erzeugen (706) von angesammelten Verkehrsinformationen das Verschlüsseln der Verkehrsinformationen umfasst.

4. Verfahren nach Anspruch 1, ferner enthaltend das Zurücksenden der angeforderten Inhalte an die Benutzervorrichtung im Einklang mit dem im Einklang mit den generierten Metriken bestimmten Zusatzinhalt.

5. Verfahren nach Anspruch 1, wobei der Herausgeber dem Bediener den verknüpften eindeutigen Anforderungsidentifikator vorlegt und wobei der Bediener den verknüpften eindeutigen Anforderungsidentifikator entschlüsselt, um den verknüpften Benutzeridentifikator wiederherzustellen.

6. Bediener-Cloud-Computersystem (206, 800), welches Verkehrsinformationen zu Netzwerkkommunikationen bereitstellt, wobei das System Folgendes umfasst:
ein Kommunikationsuntersystem (814), konfiguriert für Kommunikation durch das Bediener-Cloud-Computersystem mit einem Netzwerk (208);
einen Prozessor (802) des Bediener-Cloud-Computersystems (206, 800), konfiguriert zum:
Empfangen (702) einer Netzwerkkommunikation durch einen Bediener (204, 302, 402, 502) aus einer Gruppe von mehreren Bedienern (204), wobei die Netzwerkkommunikation als Reaktion auf eine Benutzeranforderung von einer mit einem Mobilbenutzer mit einem Abonnentenkonto (304, 403, 503) bei dem Bediener verknüpften Benutzervorrichtung (202) von dem Bediener an den empfangenden Prozessor des Bediener-Cloud-Computersystems (206, 800) gesendet wird, wobei die Benutzeranforderung eine bei dem Bediener empfangene Anforderung von einer Mobilanwendung durch die Benutzervorrichtung nach Inhalten von einem Herausgeber (210, 310, 410, 510) ist, wobei die Benutzeranforderung einen verknüpften eindeutigen Anforderungsidentifikator und eine Anforderung nach Inhalten aufweist, wobei jeder eindeutige Anforderungsidentifikator von dem Bediener durch Ausführen von Verschlüsselung auf der Grundlage eines Benutzeridentifikators der Benutzeranforderung generiert wird und nur mit der bestimmten Benutzeranforderung verknüpft ist,
wobei der Prozessor (802) ferner konfiguriert ist zum:
Erzeugen (706) von angesammelten Verkehrsinformationen, wobei die angesammelten Verkehrsinformationen sich auf die von dem Bediener empfangene Netzwerkkommunikation beziehen und sich auf mehrere zuvor empfangene Netzwerkkommunikationen beziehen, wobei jede der mehreren zuvor empfangenen Netzwerkkommunikationen von einem der mehreren Bediener als Reaktion auf jeweilige Benutzeranforderungen nach Inhalten an den Prozessor des Bediener-Cloud-Computersystems gesendet worden ist, wobei die jeweiligen Benutzeranforderungen jeweils einen verknüpften eindeutigen Anforderungsidentifikator und eine damit verknüpfte Anforderung nach Inhalten aufweisen, wobei der durch Ausführen von Verschlüsselung eindeutige Anforderungsidentifikator auf der Grundlage eines Benutzeridentifikators jeder jeweiligen Benutzeranforderung von dem Bediener generiert wird und nur mit der bestimmten jeweiligen Benutzeranforderung verknüpft ist;
wobei der Prozessor (802) ferner konfiguriert ist zum (708):
Generieren von Metriken (312, 628) mit Bezug auf die gesammelten Verkehrsinformationen unter Einsatz des eindeutigen Anforderungsidentifikators jeder jeweiligen Benutzeranforderung nach Inhalten;
Abrufen der angeforderten Inhalte von dem Herausgeber auf der Grundlage der Anforderung nach Inhalten und Bereitstellen der abgerufenen angeforderten Inhalte an den Bediener als Reaktion auf die empfangene Netzwerkkommunikation; und
Bereitstellen der generierten Metriken an den Herausgeber, wobei den bereitgestellten Metriken aufgrund der zum Generieren des verknüpften eindeutigen Anforderungsidentifikators eingesetzten Verschlüsselung durch den Bediener eine Identifikation des mit dem Abonnentenkonto verknüpften Benutzers fehlt.

7. Computersystem nach Anspruch 6, wobei der Prozessor ferner konfiguriert ist, den eindeutigen Anforderungsidentifikator der empfangenen Netzwerkkommunikation zuzuordnen (704).

8. Computersystem nach Anspruch 6, wobei der Prozessor ferner konfiguriert ist, die angesammelten Verkehrsinformationen zu verschlüsseln.

9. Computersystem nach Anspruch 6, ferner umfassend das Zurücksenden der angeforderten Inhalte an die Benutzervorrichtung im Einklang mit dem im Einklang mit den generierten Metriken bestimmten Zusatzinhalt.

10. Computersystem nach Anspruch 6, wobei der Herausgeber konfiguriert ist, dem Bediener den verknüpften eindeutigen Anforderungsidentifikator vorzulegen und wobei der Bediener konfiguriert ist, den verknüpften eindeutigen Anforderungsidentifikator zu entschlüsseln, um den verknüpften Benutzeridentifikator wiederherzustellen.

11. Computerprogramm (822), welches, wenn in einem Computer oder einem Computernetzwerk ausgeführt, die Schritte nach einem der Ansprüche 1 bis 5 ausführt.

12. Computerprogramm nach Anspruch 11, wenn auf einem computerlesbaren Speichermedium (810b) gespeichert.

## Revendications

1. Procédé de fourniture d'informations de trafic pour des communications de réseau, le procédé comprenant :
la réception (702) d'une communication de réseau au niveau d'un ordinateur en nuage d'opérateur (206) par l'intermédiaire d'un opérateur (204, 302, 304, 502) d'un ensemble de multiples opérateurs (204), la communication de réseau étant envoyée par l'opérateur, à l'ordinateur en nuage d'opérateur de réception, en réponse à une demande d'utilisateur provenant d'un dispositif d'utilisateur (202) associé à un utilisateur mobile ayant un compte d'abonné (304, 403, 503) avec l'opérateur, dans lequel la demande d'utilisateur est une demande en provenance d'une application mobile par le dispositif d'utilisateur qui a été reçue au niveau de l'opérateur concernant un contenu d'un éditeur (210, 310, 410, 510), la demande d'utilisateur ayant un identifiant de demande unique associé et une demande de contenu, l'identifiant de demande unique étant généré par l'opérateur pour réaliser un chiffrement d'après un identifiant d'utilisateur de la demande d'utilisateur et étant associé uniquement à la demande d'utilisateur particulière ;
la production (706) d'informations de trafic accumulées au niveau de l'ordinateur en nuage d'opérateur, les informations de trafic accumulées concernant la communication de réseau reçue en provenance de l'opérateur et concernant une pluralité de communications de réseau précédemment reçues, chacune de la pluralité de communications de réseau précédemment reçues ayant été envoyée à l'ordinateur en nuage d'opérateur par l'un des multiples opérateurs en réponse à des demandes d'utilisateur respectives de contenu, les demandes d'utilisateur respectives ayant chacune un identifiant de demande unique associé et une demande associée de contenu, chaque identifiant de demande unique étant généré par l'opérateur en réalisant un chiffrement d'après un identifiant d'utilisateur de chaque demande d'utilisateur respective et étant associé uniquement à la demande d'utilisateur respective particulière ;
la génération (708), au niveau de l'ordinateur en nuage d'opérateur, de mesures (312, 628) concernant les informations de trafic accumulées à l'aide de l'identifiant de demande unique de chaque demande d'utilisateur respective de contenu ;
la récupération du contenu demandé auprès de l'éditeur au niveau de l'ordinateur en nuage d'opérateur d'après la demande de contenu et la fourniture du contenu demandé récupéré de l'ordinateur en nuage d'opérateur à l'opérateur, en réponse à la communication de réseau reçue ; et
la fourniture des mesures générées de l'ordinateur en nuage d'opérateur à l'éditeur, les mesures fournies étant dépourvues d'une identification de l'utilisateur associé au compte d'abonné en raison du chiffrement par l'opérateur utilisé pour générer l'identifiant de demande unique associé.

2. Procédé selon la revendication 1, dans lequel la réception de la communication de réseau comporte en outre l'attribution (704) de l'identifiant de demande unique à la communication de réseau reçue.

3. Procédé selon la revendication 1, dans lequel la production (706) d'informations de trafic accumulées comprend le chiffrement des informations de trafic.

4. Procédé selon la revendication 1, comportant en outre le renvoi du contenu demandé au dispositif d'utilisateur selon un contenu supplémentaire déterminé selon les mesures générées.

5. Procédé selon la revendication 1, dans lequel l'éditeur présente l'identifiant de demande unique associé à l'opérateur, et dans lequel l'opérateur déchiffre l'identifiant de demande unique associé pour retrouver l'identifiant d'utilisateur associé.

6. Système d'ordinateur en nuage d'opérateur (206, 800) qui fournit des informations de trafic pour des communications de réseau, le système comprenant :
un sous-système de communications (814) configuré pour une communication par le système d'ordinateur en nuage d'opérateur avec un réseau (208) ;
un processeur (802) du système d'ordinateur en nuage d'opérateur (206, 800), configuré pour :
recevoir (702) une communication de réseau par l'intermédiaire d'un opérateur (204, 302, 402, 502) d'un ensemble de multiples opérateurs (204), la communication de réseau étant envoyée par l'opérateur, au processeur de réception du système d'ordinateur en nuage d'opérateur (206, 800), en réponse à une demande d'utilisateur provenant d'un dispositif d'utilisateur (202) associé à un utilisateur mobile ayant un compte d'abonné (304, 403, 503) avec l'opérateur, dans lequel la demande d'utilisateur est une demande en provenance d'une application mobile par le dispositif d'utilisateur qui a été reçue au niveau de l'opérateur concernant un contenu d'un éditeur (210, 310, 410, 510), la demande d'utilisateur ayant un identifiant de demande unique associé et une demande de contenu, chaque identifiant de demande unique étant généré par l'opérateur en réalisant un chiffrement d'après un identifiant d'utilisateur de la demande d'utilisateur et étant associé uniquement à la demande d'utilisateur particulière ;
le processeur (802) étant en outre configuré pour :
produire (706) des informations de trafic accumulées, les informations de trafic accumulées concernant la communication de réseau reçue en provenance de l'opérateur et concernant une pluralité de communications de réseau précédemment reçues, chacune de la pluralité de communications de réseau précédemment reçues ayant été envoyée au processeur du système d'ordinateur en nuage d'opérateur par l'un des multiples opérateurs en réponse à des demandes d'utilisateur respectives de contenu, les demandes d'utilisateur respectives ayant chacune un identifiant de demande unique associé et une demande associée de contenu, l'identifiant de demande unique étant généré par l'opérateur en réalisant un chiffrement d'après un identifiant d'utilisateur de chaque demande d'utilisateur respective et étant associé uniquement à la demande d'utilisateur respective particulière,
le processeur (802) étant en outre configuré pour (708) :
générer des mesures (312, 628) concernant les informations de trafic accumulées à l'aide de l'identifiant de demande unique de chaque demande d'utilisateur respective de contenu ;
récupérer le contenu demandé auprès de l'éditeur d'après la demande de contenu et fournir le contenu demandé récupéré à l'opérateur en réponse à la communication de réseau reçue ; et
fournir les mesures générées à l'éditeur, les mesures fournies étant dépourvues d'une identification de l'utilisateur associé au compte d'abonné en raison du chiffrement par l'opérateur utilisé pour générer l'identifiant de demande unique associé.

7. Système d'ordinateur selon la revendication 6, dans lequel le processeur est en outre configuré pour attribuer (704) l'identifiant de demande unique à la communication de réseau reçue.

8. Système d'ordinateur selon la revendication 6, dans lequel le processeur est en outre configuré pour chiffrer les informations de trafic accumulées.

9. Système d'ordinateur selon la revendication 6, comprenant en outre le renvoi du contenu demandé au dispositif d'utilisateur selon un contenu supplémentaire déterminé selon les mesures générées.

10. Système d'ordinateur selon la revendication 6, dans lequel l'éditeur est configuré pour présenter l'identifiant de demande unique associé à l'opérateur, et dans lequel l'opérateur est configuré pour déchiffrer l'identifiant de demande unique associé pour retrouver l'identifiant d'utilisateur associé.

11. Programme d'ordinateur (822) qui, lorsqu'il est exécuté au sein d'un ordinateur ou d'un réseau d'ordinateurs, réalise les étapes de l'une quelconque des revendications 1 à 5.

12. Programme d'ordinateur selon la revendication 11, lorsqu'il est stocké sur un support de stockage lisible par ordinateur (810b).
